# FASCICULE DE BREVET EUROPEEN

(11) **EP 1 111 268 B1**
(45) Date de publication et mention de la délivrance du brevet: **01.09.2004**
(21) Numéro de dépôt: 00403552.3
(22) Date de dépôt: 15.12.2000
(51) Int. Cl.: F16F 13/10

(54) **Support antivibratoire hydraulique actif et système antivibratoire actif comportant un tel support**
Hydraulisches, schwingungsdämpfendes Lager und dieses enthaltendes, aktives Schwingungsdämpfungssystem
Hydraulic anti-vibration support and active damping system including the same

(30) Priorité: 22.12.1999 FR 9916243
(43) Date de publication de la demande: 27.06.2001
(73) Titulaire: Hutchinson, 75440 Paris Cedex 9 (FR)
(72) Inventeur: Gennesseaux, André, 28200 Conie-Molitard (FR)
(74) Mandataire: Burbaud, Eric

(56) Documents cités:
- DE-A- 3 801 108
- DE-A- 19 620 219
- US-A- 5 167 403
- US-A- 5 215 293
- US-A- 5 249 782

## Description

La présente invention est relative aux supports antivibratoires hydrauliques actifs et aux systèmes antivibratoires actifs comportant de tels supports. De tels supports sont destinés notamment au montage des moteurs sur les caisses de véhicules automobiles et sont adaptés pour produire des contre-vibrations visant à annuler les effets des vibrations de ces moteurs.

Plus particulièrement, l'invention concerne un support antivibratoire hydraulique actif destiné à être interposé entre deux éléments rigides et comportant :
- des première et deuxième armatures rigides destinées à être solidarisées respectivement avec les deux éléments rigides à réunir,
- un corps en élastomère qui relie entre elles les deux armatures et qui délimite partiellement une chambre de travail remplie de liquide,
- une paroi souple délimitant partiellement une chambre de compensation remplie de liquide, laquelle est reliée à la chambre de travail par un passage étranglé également rempli de liquide,
- un organe excitateur présentant une première face qui communique avec le liquide contenu dans la chambre de travail et une deuxième face opposée isolée de ladite chambre de travail, ledit organe excitateur étant monté mobile selon une direction de déplacement sensiblement perpendiculaire aux première et deuxième faces de l'organe excitateur, à partir d'une position de repos,
- un dispositif de commande adapté pour déplacer l'organe excitateur, au moins dans un premier sens dans ladite direction de déplacement, vers une position de butée de fin de course,
- un dispositif de rappel élastique exerçant en permanence une force de rappel sur l'organe excitateur vers sa position de repos, en suivant une certaine courbe d'élasticité qui donne ladite force de rappel en fonction du déplacement subi par cet organe excitateur parallèlement à la direction de déplacement, cette courbe présentant une tangente pour une première valeur de déplacement (nulle ou non) qui correspond à la position de repos de l'organe excitateur, et la force de rappel présentant une certaine valeur limite pour une deuxième valeur de déplacement correspondant à la butée de fin de course de l'organe excitateur.

Un tel support est connu du document US-A-5 249 782.

Dans les supports antivibratoires connus de ce type, le dispositif de rappel élastique est sensiblement linéaire, de sorte que la courbe d'élasticité correspond sensiblement à ladite tangente.

Ces supports antivibratoires donnent satisfaction au plan de leur fonctionnement, mais présentent néanmoins l'inconvénient de nécessiter un dispositif de commande particulièrement puissant pour immobiliser l'organe excitateur dans sa position de butée de fin de course, notamment lorsque le moteur du véhicule fonctionne à un régime relativement élevé.

En effet, dans ce cas, le dispositif de commande doit appliquer à l'organe excitateur une force nettement supérieure à ladite valeur limite de la force de rappel, pour garantir que l'organe excitateur reste immobilisé malgré les sollicitations dynamiques appliquées à cet organe.

Il en résulte que le dispositif de commande doit être surdimensionné pour être capable de bloquer l'organe excitateur, de sorte que ce dispositif de commande est relativement lourd et coûteux.

La présente invention a notamment pour but de pallier cet inconvénient.

À cet effet, un support antivibratoire selon l'invention est caractérisé en ce que la courbe d'élasticité du dispositif de rappel élastique est non linéaire et est située en-dessous de ladite tangente au moins au voisinage de la deuxième valeur de déplacement.

Grâce à ces dispositions, la force que doit exercer le dispositif de commande pour immobiliser l'organe excitateur dans sa position de blocage est inférieure à la force qui était nécessaire dans les supports antivibratoires de l'art antérieur, de sorte qu'il n'est plus nécessaire de surdimensionner le dispositif de commande.

Dans des modes de réalisation préférés du support antivibratoire selon l'invention, on peut éventuellement avoir recours en outre à l'une et/ou à l'autre des dispositions suivantes :
- la courbe d'élasticité du dispositif de rappel présente un maximum entre les première et deuxième valeurs de déplacement ;
- la courbe d'élasticité du dispositif de rappel présente un minimum sensiblement au niveau de la deuxième valeur de déplacement ;
- la courbe d'élasticité du dispositif de rappel présente une partie initiale linéaire ;
- l'organe excitateur comporte une membrane en élastomère qui forme au moins en partie le dispositif de rappel, cette membrane présentant au repos une forme sensiblement tronconique qui converge vers la chambre de travail depuis une base annulaire solidarisée avec une cloison rigide qui délimite ladite chambre de travail ;
- l'organe excitateur comporte une paroi centrale rigide qui est reliée à la cloison rigide par la membrane en élastomère ;
- la membrane en élastomère présente une zone annulaire d'épaisseur réduite au voisinage de sa base annulaire ;
- le dispositif de commande comporte une chambre pneumatique qui est en contact avec la deuxième face de l'organe excitateur et qui est destinée à être reliée sélectivement soit à une source de dépression, soit à l'atmosphère.

Par ailleurs, l'invention a également pour objet un système antivibratoire actif comportant :
- au moins un support antivibratoire hydraulique actif telle que défini ci-dessus, dans lequel le dispositif de commande est constitué par une chambre pneumatique en contact avec la deuxième face de l'organe excitateur,
- et un dispositif d'actionnement qui est adapté pour être relié à au moins un dispositif formant capteur pour recevoir des informations représentatives du régime du moteur du véhicule, ce dispositif d'actionnement étant adapté pour:
   - relier cycliquement la chambre pneumatique avec une source de dépression et avec l'atmosphère pour faire vibrer l'organe excitateur de façon à générer des contre-vibrations dans la chambre de travail lorsque les informations reçues du dispositif formant capteur indiquent que le moteur du véhicule fonctionne à un régime de ralenti,
   - et relier la chambre pneumatique de façon permanente à la source de dépression lorsque que les informations reçues du dispositif formant capteur indiquent que le moteur du véhicule fonctionne à un régime supérieur au régime de ralenti, de façon à maintenir alors l'organe excitateur dans sa position de butée de fin de course.

Avantageusement, le dispositif d'actionnement est adapté pour que la chambre pneumatique applique sur l'organe excitateur une force moyenne correspondant à une partie initiale linéaire de la courbe d'élasticité du dispositif de rappel, lorsque le moteur fonctionne au ralenti.

D'autres caractéristiques et avantages de l'invention apparaîtront au cours de la description suivante d'une de ses formes de réalisation, donnée à titre d'exemple non limitatif, en regard des dessins joints.

Sur les dessins :

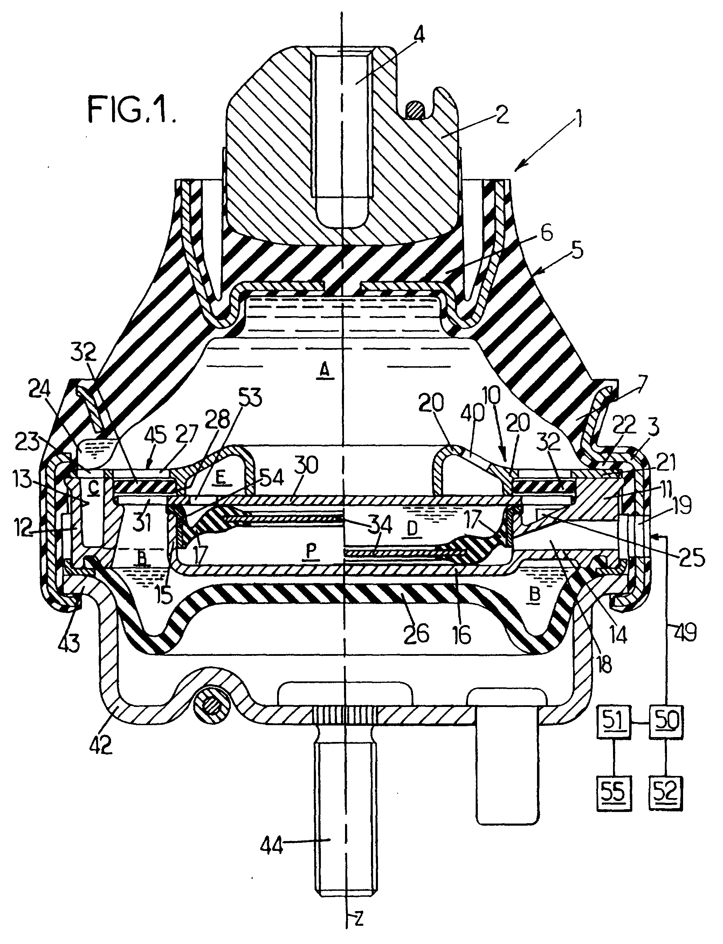

- la figure 1 est une vue en coupe verticale d'un support antivibratoire selon une forme de réalisation de l'invention, le piston excitateur du support antivibratoire étant représenté en position de repos sur la partie gauche de la figure et en position de butée de fin de course sur la partie droite de la figure,

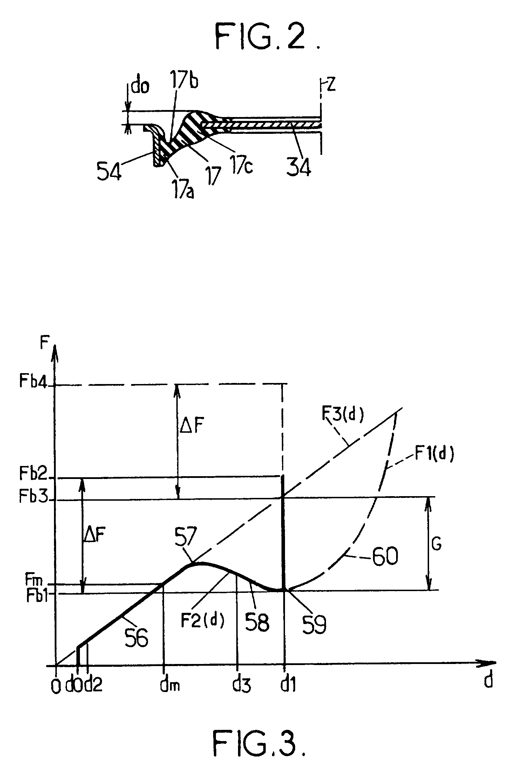

- la figure 2 est une demi-vue en coupe verticale du piston excitateur et de sa membrane élastique, à l'état libre,
- et la figure 3 est un graphe représentant la courbe d'élasticité de la membrane élastique du piston excitateur appartenant au support de la figure 1 (courbe F1(d)), la courbe de l'effort appliqué par le dispositif de commande sur ce piston (courbe F2(d)) et la courbe d'élasticité d'une membrane à élasticité linéaire (courbe F3(d)).

Sur les différentes figures, les mêmes références désignent des éléments identiques ou similaires.

Dans la description qui suit, les termes tels que "haut, bas, inférieur, supérieur, horizontal, vertical" sont utilisés dans le seul but d'améliorer la clarté de la description, en se référant à la position d'utilisation la plus habituelle du dispositif selon l'invention, mais ces termes ne sont pas limitatifs.

Comme représenté sur la figure 2, le support antivibratoire hydraulique 1 comporte des première et deuxième armatures 2, 3 qui sont par exemple destinées à être fixées respectivement au bloc motopropulseur et à la caisse d'un véhicule automobile.

Dans l'exemple considéré, la première armature 2 se présente sous la forme d'un plot qui est centré sur un axe vertical Z et qui est percé d'un trou fileté 4 permettant sa fixation au bloc motopropulseur, tandis que la deuxième armature 3 est formée par une couronne d'acier également centrée sur l'axe Z.

Ces deux armatures 2, 3 sont reliées entre elles par un corps en élastomère 5 relativement épais, qui présente une résistance à la compression suffisante pour reprendre les efforts statiques dus au poids du bloc motopropulseur. Ce corps en élastomère 5 présente une paroi latérale en forme de cloche qui s'étend entre un sommet 6 solidaire du plot 2, et une base annulaire 7 qui est solidaire de la couronne 3.

Par ailleurs, la deuxième armature 3 entoure une cloison rigide 10 qui délimite avec le corps en élastomère 5 une chambre de travail A remplie de liquide.

Dans l'exemple considéré ici, cette cloison 10 comporte un corps 11 moulé en alliage léger qui comprend lui-même :
- une couronne 12 centrée sur l'axe Z et dans laquelle est évidée une gorge 13 ouverte vers le haut qui s'étend angulairement sur une partie de la périphérie de la couronne 12,
- une tubulure 14 qui s'étend radialement vers l'intérieur à partir de la couronne 12,
- et une cuvette intérieure ouverte vers le haut, comportant une paroi latérale 15 qui est solidaire de l'extrémité intérieure de la tubulure 14 et qui est formée d'une seule pièce avec un fond 16, cette paroi latérale 15 pouvant le cas échéant être reliée en outre à la couronne 12 par des supports radiaux supplémentaires (non représentés) répartis sur la périphérie de ladite bague.

De plus, une membrane souple en élastomère 17 est fixée par adhérisation sur la périphérie intérieure d'une bague 54 emboîtée à force dans la paroi latérale 15, de façon à délimiter avec le fond 16 une chambre pneumatique P étanche qui communique uniquement avec un conduit d'air 18 délimité intérieurement par la tubulure 14 et débouchant vers l'extérieur du support antivibratoire à travers un trou 19 ménagé dans l'armature 3.

La membrane souple 17 présente une forme annulaire tronconique qui converge vers le haut, c'est-à-dire vers la chambre de travail A, entre une base annulaire extérieure 17a solidarisée avec la bague 54 et une partie centrale 17c solidarisée avec une plaque rigide 34 formant piston, qui constitue un organe excitateur adapté pour générer des contre-vibrations dans la chambre de travail A.

La base annulaire 17a et la partie centrale 17c de la membrane 17 sont avantageusement relativement épaisses et séparées l'une de l'autre par une partie annulaire 17b de moindre épaisseur, qui forme une charnière près de la base 17a de la membrane.

Comme représenté sur la figure 2, à l'état libre, la partie centrale 17c de la membrane dépasse d'une distance dO au-dessus du bord supérieur de la bague 54, de sorte que la membrane 17 est légèrement précontrainte lors de son montage dans le support antivibratoire 1 de la figure 1, où le bord supérieur de la partie centrale 17c de la membrane se trouve sensiblement au même niveau que le bord supérieur de la bague 54.

La membrane 17 qui vient d'être décrite présente une courbe d'élasticité F1(d) donnant la force de rappel élastique F exercée par cette membrane 17 sur l'organe excitateur 34 vers la chambre de travail, en fonction du déplacement d dudit organe excitateur vers le bas, à partir de la position libre représentée sur la figure 2. Cette courbe d'élasticité présente une partie initiale linéaire 56 qui s'étend jusqu'à un maximum 57 (correspondant sensiblement à l'alignement horizontal entre la base 17a et la partie centrale 17c de la membrane) et qui se prolonge avantageusement par une portion descendante 58 jusqu'à un minimum 59 au-delà duquel la courbe F1(d) peut éventuellement se prolonger encore par une portion ascendante 60 correspondant à un allongement de la membrane 17.

Éventuellement, la courbe d'élasticité de la membrane 17 pourrait présenter une forme différente, pourvu que cette courbe passe en-dessous de la droite F3(d) qui prolonge la partie linéaire 56 de la courbe d'élasticité, c'est-à-dire en-dessous de la tangente à la courbe d'élasticité au point d'abscisse d0 (cette tangente correspond à la courbe d'élasticité d'une membrane élastique 17 qui aurait par exemple une forme purement radiale, ou d'un autre dispositif de rappel élastique linéaire tel qu'un ressort métallique à spirale).

Mais dans tous les cas, la courbe F1(d) ne doit prendre que des valeurs positives, correspondant à un rappel du piston 34 vers la position de repos : autrement dit, la membrane 17 ne doit pas constituer un ressort bistable.

Par ailleurs, la cloison rigide 10 comporte en outre un couvercle 20, qui peut, comme le corps 11, être moulé en alliage léger, et qui recouvre ledit corps 11 en direction de la chambre de travail A.

Le couvercle 20 comporte une partie annulaire externe 21 pleine qui est appliquée en contact étanche contre un épaulement 22 orienté vers le bas, lequel épaulement est formé par la bague 7 du corps en élastomère et par la partie supérieure de la deuxième armature 3.

Cette partie annulaire externe 21 du couvercle 20 obture la partie supérieure de la gorge 13 ménagée dans le corps de la cloison rigide, de façon à délimiter avec cette gorge un passage étranglé C rempli de liquide, qui s'étend entre :
- d'une part, une première extrémité qui communique avec la chambre de travail A par l'intermédiaire d'un trou 23 ménagé dans la partie annulaire externe 21 du couvercle et par l'intermédiaire d'un évidement 24 ménagé dans la partie intérieure de la base 7 du corps en élastomère,
- et d'autre part, une deuxième extrémité qui débouche radialement vers l'intérieur de la couronne 12 par l'intermédiaire d'un évidement 25 ménagé dans cette couronne de façon à communiquer avec une chambre de compensation B remplie de liquide, laquelle chambre de compensation est délimitée entre la cloison rigide 10 et une paroi souple en élastomère 26 en forme de soufflet, disposée sous la cloison 10.

Par ailleurs, le couvercle 20 peut éventuellement comporter en outre, radialement vers l'intérieur du rebord annulaire 21, une grille annulaire 27 formée par une série de trous répartis angulairement autour de l'axe Z. Au niveau de la périphérie intérieure de la grille 27, le couvercle présente une couronne 28 centrée sur l'axe Z, qui fait saillie axialement vers le bas en appuyant sur une plaque rigide 30 qui s'étend dans un plan perpendiculaire audit axe Z. Cette plaque 30 comporte, à sa périphérie extérieure, une série de trous axiaux qui sont répartis angulairement et qui forment une grille 31 disposée en regard de la grille 27 susmentionnée en formant avec celle-ci un ajutage annulaire 45 qui est obturé par un clapet 32, formé par une rondelle en élastomère emprisonnée avec un très faible jeu entre les grilles 27 et 31.

Un boîtier en tôle 42 vient compléter le support antivibratoire en recouvrant la paroi souple 26 vers le bas, la périphérie 43 de ce boîtier étant appliquée contre la périphérie de la paroi souple 26 qui est elle-même en appui sous la couronne 12 du corps de la cloison rigide 10, et le bord inférieur de la deuxième armature 13 étant serti sous le rebord extérieur 43 du boîtier de façon à solidariser l'ensemble du corps en élastomère.

Le fond du boîtier 42 comporte des moyens de fixation, comprenant notamment un goujon 44, pour fixer ledit boîtier sur la caisse du véhicule, en solidarisant ainsi la deuxième armature 3 avec ladite caisse.

Enfin, le passage d'air 14 est relié à un circuit pneumatique extérieur 49 qui est adapté pour communiquer soit avec le circuit d'admission d'air 52 du moteur, soit avec l'atmosphère. La mise en communication du circuit 49 avec le circuit d'admission 52 ou avec l'atmosphère est réalisée par l'intermédiaire d'une électrovanne 50 à trois voies commandées par un circuit de contrôle 51 tel que le calculateur de bord du véhicule, ou autre.

Le support antivibratoire qui vient d'être décrit fonctionne comme suit.

Lorsque le véhicule dans lequel est installé le support antivibratoire ne fonctionne pas, ce support reste dans la position de repos représentée sur la partie gauche de la figure 1, et la partie centrale 17c de la membrane 17 est en butée sous la plaque 30.

Lorsque le moteur du véhicule est démarré et fonctionne au ralenti, en générant ainsi au niveau du plot 2 des mouvements vibratoires qui présentent généralement une fréquence comprise par exemple entre 20 et 80 Hz, la chambre pneumatique P est alternativement mise en dépression et à la pression atmosphérique, par l'électrovanne 50 commandée par le calculateur 51. Il en résulte des mouvements vibratoires de la membrane flexible 17 et du piston 34, qui oscille entre des positions extrêmes correspondant à des déplacements vers le bas compris entre des valeurs d2 et d3 à partir de la position libre de la figure 2.

Comme représenté sur la figure 3, dans l'exemple considéré, ces mouvements vibratoires ont lieu majoritairement sur la partie linéaire 56 de la courbe d'élasticité F1(d), et sur une partie de sa portion descendante 58.

Dans tous les cas, il est souhaitable que le déplacement moyen dm subi par le piston 34 au cours de ces oscillations sous l'effet de la force moyenne Fm exercée sur le piston 34, se trouve sur la partie linéaire 56 de la courbe F1(d).

Ces mouvements vibratoires émettent, dans la chambre intermédiaire D délimitée entre la membrane 17 et la plaque 30, des contre-vibrations visant à neutraliser les effets des vibrations du moteur. Ces contre-vibrations sont optimisées par le calculateur 51 selon un programme prédéterminé, en fonction du régime du moteur et de divers paramètres pouvant influer sur les vibrations de ralenti (fonctionnement de la climatisation, consommation d'électricité, température du moteur, etc.) en agissant par exemple sur les paramètres suivants :
- l'amplitude des vibrations du piston 34 qui est contrôlée en agissant sur le rapport cyclique du signal envoyé à l'électrovanne 50 (rapport entre le temps pendant lequel l'électrovanne 50 met la chambre pneumatique P en dépression et la durée totale d'une période de vibrations),
- la phase des vibrations du piston 34, contrôlée en agissant sur l'instant initial de chaque cycle d'actionnement de l'électrovanne 50 par rapport à la rotation du moteur, laquelle rotation est repérée par exemple au moyen d'un capteur 55 par le passage d'un cylindre donné à son point mort haut.

Les contre-vibrations ainsi émises par le piston 34 dans la chambre intermédiaire D sont transmises à la chambre de travail A par l'intermédiaire du passage étranglé E délimité entre le couvercle 20 et la plaque 30, ce passage E communiquant avec la chambre de travail A par un orifice 40 ménagé dans le couvercle 20 et avec la chambre intermédiaire D par un orifice 53 ménagé dans la plaque 30. Le passage étranglé E est dimensionné de façon à présenter une fréquence de résonance située par exemple dans la plage allant de 10 à 90 Hz, et correspondant sensiblement à la fréquence du ralenti. Compte tenu du très faible jeu du clapet de découplage 32, il ne perturbe pas l'effet des contre-vibrations de façon sensible.

On notera qu'il serait possible de remplacer la commande pneumatique du piston 34 ou d'un autre organe excitateur, par une commande électromécanique et/ou électromagnétique sans pour autant sortir du cadre de l'invention, cette commande agissant de préférence uniquement dans le sens du déplacement du piston 34 à l'opposé de la chambre de travail A tandis que la membrane 17 ou un autre moyen élastique agirait en sens inverse.

Lorsque le véhicule roule et que son moteur fonctionne à un régime suffisant, correspondant par exemple à des vibrations de fréquence supérieure à 90 Hz, l'électrovanne 50 est actionnée de façon à mettre la chambre pneumatique P en dépression permanente, comme représenté sur la partie droite de la figure 1. Il en résulte que la membrane souple 17 se plaque sensiblement contre le fond 16, dans une position de butée de fin de course. Ainsi, pendant le roulage du véhicule, le clapet 32 assure un découplage axial entre les armatures 2 et 3 vis-à-vis des vibrations de haute fréquence et de faible amplitude (par exemple, fréquence supérieure à 20 Hz et amplitude inférieure à 1 mm), tandis que le passage étranglé C est dimensionné pour représenter une fréquence de résonance généralement inférieure à 20 Hz, de façon à amortir les mouvements de hachis, de relativement faible fréquence (par exemple, inférieure à 20 Hz) et de relativement grande amplitude (par exemple, supérieure à 1 mm) générés par le roulage du véhicule.

Comme représenté sur la figure 3, la position de butée de fin de course du piston 34 correspond de préférence à un déplacement dl dudit piston (par rapport à l'état libre de la figure 2) correspondant sensiblement au minimum 59 de la courbe F1(d). Dans cette position, on exerce sur le piston 34 une force F2(d) ayant une valeur Fb2=Fb1+ΔF, où Fb1 est la valeur F1(d1) donnée par la courbe d'élasticité de la membrane 17 et ΔF est une marge de sécurité garantissant le blocage du piston 34.

En comparaison, si l'on utilisait une membrane élastique ayant un comportement linéaire sur toute la plage d'utilisation, c'est à dire une membrane qui suit la courbe F3(d), comme dans l'art antérieur, il serait nécessaire d'appliquer au piston 34 une force Fb4=Fb3+ΔF, où Fb3=F3(d1). Comme Fb3 est supérieure à Fb1, il faudrait donc appliquer une force nettement supérieure à celle nécessitée par la présente invention. L'invention permet donc de limiter le dimensionnement du système d'actionnement pneumatique du piston 34, puisque la force maximale produite par ce système peut être inférieure de G=Fb3-Fb1 à la force maximale produite dans les supports antivibratoires de l'art antérieur.

## Revendications

1. Support antivibratoire hydraulique actif destiné à être interposé entre deux éléments rigides et comportant :
- des première et deuxième armatures rigides (2, 3) destinées à être solidarisées respectivement avec les deux éléments rigides à réunir,
- un corps en élastomère (5) qui relie entre elles les deux armatures (2, 3) et qui délimite partiellement une chambre de travail (A) remplie de liquide,
- une paroi souple (26) délimitant partiellement une chambre de compensation (B) remplie de liquide, laquelle est reliée à la chambre de travail par un passage étranglé (C) également rempli de liquide,
- un organe excitateur (34) présentant une première face qui communique avec le liquide contenu dans la chambre de travail (A) et une deuxième face opposée isolée de ladite chambre de travail, ledit organe excitateur étant monté mobile selon une direction de déplacement (Z) sensiblement perpendiculaire aux première et deuxième faces de l'organe excitateur, à partir d'une position de repos,
- un dispositif de commande (P) adapté pour déplacer l'organe excitateur (34), au moins dans un premier sens dans ladite direction de déplacement, vers une position de butée de fin de course,
- un dispositif de rappel élastique (17) exerçant en permanence une force de rappel sur l'organe excitateur (34) vers sa position de repos, en suivant une certaine courbe d'élasticité (F1(d)) qui donne ladite force de rappel en fonction du déplacement subi par cet organe excitateur parallèlement à la direction de déplacement, cette courbe présentant une tangente (F3(d)) pour une première valeur de déplacement (d0) qui correspond à la position de repos de l'organe excitateur, et la force de rappel présentant une certaine valeur limite (Fb1) pour une deuxième valeur de déplacement (d1) correspondant à la butée de fin de course de l'organe excitateur,
**caractérisé en ce que** la courbe d'élasticité (F1(d)) du dispositif de rappel est non linéaire et est située en-dessous de ladite tangente (F3(d)) au moins au voisinage de la deuxième valeur de déplacement (d1).

2. Support antivibratoire selon la revendication 1, dans lequel la courbe d'élasticité (F1(d)) du dispositif de rappel présente un maximum (57) entre les première et deuxième valeurs de déplacement.

3. Support antivibratoire selon la revendication 1 ou la revendication 2, dans lequel la courbe d'élasticité (F1(d)) du dispositif de rappel présente un minimum (59) sensiblement au niveau de la deuxième valeur de déplacement.

4. Support antivibratoire selon l'une quelconque des revendications précédentes, dans lequel la courbe d'élasticité (F1(d)) du dispositif de rappel présente une partie initiale (56) linéaire.

5. Support antivibratoire selon l'une quelconque des revendications précédentes, dans lequel le dispositif de rappel comporte une membrane en élastomère (17) qui présente au repos une forme sensiblement tronconique convergeant vers la chambre de travail (A) depuis une base annulaire (17a) solidarisée avec une cloison rigide (10) qui délimite ladite chambre de travail.

6. Support antivibratoire selon la revendication 5, dans lequel l'organe excitateur comporte une paroi centrale rigide (34) qui est reliée à la cloison rigide (10) par la membrane en élastomère (17).

7. Support antivibratoire selon l'une quelconque des revendications 5 et 6, dans lequel la membrane en élastomère présente une zone annulaire (17b) d'épaisseur réduite au voisinage de sa base annulaire (17a).

8. Support antivibratoire selon l'une quelconque des revendications précédentes, dans lequel le dispositif de commande comporte une chambre pneumatique (P) qui est en contact avec la deuxième face de l'organe excitateur (34) et qui est destinée à être reliée sélectivement soit à une source de dépression (52), soit à l'atmosphère.

9. Système antivibratoire actif comportant :
- au moins un support antivibratoire hydraulique actif (1) selon la revendication 8,
- et un dispositif d'actionnement (50, 51) qui est adapté pour être relié à au moins un dispositif formant capteur (55) pour recevoir des informations représentatives du régime du moteur du véhicule, ce dispositif d'actionnement étant adapté pour:
• relier cycliquement la chambre pneumatique (P) avec une source de dépression (52) et avec l'atmosphère pour faire vibrer l'organe excitateur (34) de façon à générer des contre-vibrations dans la chambre de travail (A) lorsque les informations reçues du dispositif formant capteur (55) indiquent que le moteur du véhicule fonctionne à un régime de ralenti,
• et relier la chambre pneumatique (P) de façon permanente à la source de dépression (52) lorsque que les informations reçues du dispositif formant capteur (55) indiquent que le moteur du véhicule fonctionne à un régime supérieur au régime de ralenti, de façon à maintenir alors l'organe excitateur (34) dans sa position de butée de fin de course.

10. Système antivibratoire selon la revendication 9, dans lequel le dispositif d'actionnement (50,51) est adapté pour que la chambre pneumatique (P) applique sur l'organe excitateur (34) une force moyenne (Fm) correspondant à une partie initiale linéaire (56) de la courbe d'élasticité du dispositif de rappel (17), lorsque le moteur fonctionne au ralenti.

## Patentansprüche

1. Aktives hydraulisches, schwingungsdämpfendes Lager zum Anordnen zwischen zwei starren Elementen, welches Folgendes aufweist:
- eine erste und eine zweite starre Armatur (2, 3), welche jeweils mit einem der beiden zu verbindenden starren Elementen fest verbindbar sind;
- einen Elastomerkörper (5), welcher die beiden Armaturen (2, 3) miteinander verbindet und eine mit Flüssigkeit gefüllte Arbeitskammer (A) teilweise begrenzt;
- eine flexible Wand (26), welche eine mit Flüssigkeit gefüllte Ausgleichskammer (B) teilweise begrenzt, die mit der Arbeitskammer über einen ebenfalls mit Flüssigkeit gefüllten verengten Durchgang (C) verbunden ist;
- ein Ansteuerorgan (34), welches eine erste, mit der in der Arbeitskammer (A) enthaltenen Flüssigkeit in Verbindung stehende Fläche sowie eine zweite entgegengesetzte, von der genannten Arbeitskammer isolierte Fläche aufweist, wobei das genannten Ansteuerorgan von einer Ruhestellung aus in einer Verschieberichtung (Z) beweglich montiert ist, welche weitestgehend senkrecht zur ersten und zur zweiten Fläche des Ansteuerorgans verläuft;
- eine Steuerungsvorrichtung (P), welche geeignet ist, das Ansteuerorgan (34) zumindest in einem ersten Sinne in der genannten Verschieberichtung zu einer Endanschlagstellung hin zu bewegen;
- eine Rückstellvorrichtung (17), welche dauerhaft eine Rückstellkraft auf das Ansteuerorgan (34) zu seiner Ruhestellung hin ausübt und dabei einer bestimmten Elastizitätskurve (F1(d)) folgt, welche die genannte Rückstellkraft in Abhängigkeit der Verschiebung dieses Ansteuerorgans parallel zur Verschieberichtung liefert, wobei diese Kurve für einen ersten, der Ruhestellung des Ansteuerorgans entsprechenden Verschiebewert (d0) eine Tangente (F3(d)) aufweist und die Rückstellkraft für einen zweiten, der Endanschlagstellung des Ansteuerorgans entsprechenden Verschiebewert (d1) einen bestimmten Grenzwert (Fb1) aufweist,
**dadurch gekennzeichnet, dass** die Elastizitätskurve (F1(d)) der Rückstellvorrichtung nicht linear ist und sich zumindest in der Nähe des zweiten Verschiebewertes (d1) unter der genannten Tangente (F3(d)) befindet.

2. Schwingungsdämpfendes Lager nach Anspruch 1, bei dem die Elastizitätskurve (F1(d)) der Rückstellvorrichtung zwischen dem ersten und dem zweiten Verschiebewert ein Maximum (57) aufweist.

3. Schwingungsdämpfendes Lager nach Anspruch 1 oder 2, bei dem die Elastizitätskurve (F1(d)) der Rückstellvorrichtung im Wesentlichen auf der Höhe des zweiten Verschiebewertes ein Minimum (59) aufweist.

4. Schwingungsdämpfendes Lager nach einem beliebigen der vorangehenden Ansprüche, bei dem die Elastizitätskurve (F1(d)) der Rückstellvorrichtung einen linearen Anfangsabschnitt (56) aufweist.

5. Schwingungsdämpfendes Lager nach einem beliebigen der vorangehenden Ansprüche, bei dem die Rückstellvorrichtung eine Elastomermembran (17) aufweist, welche im Ruhezustand eine im Wesentlichen kegelstumpfartige Form aufweist, die von einer ringförmigen Basis (17a) aus, welche mit einer starren, die genannte Arbeitskammer begrenzenden Trennwand (10) fest verbunden ist, zur Arbeitskammer (A) hin konvergiert.

6. Schwingungsdämpfendes Lager nach Anspruch 5, bei dem das Ansteuerorgan eine zentrale starre Wand (34) aufweist, welche durch die Elastomermembran (17) mit der starren Trennwand (10) verbunden ist.

7. Schwingungsdämpfendes Lager nach einem beliebigen der Ansprüche 5 und 6, bei dem die Elastomermembran einen ringförmigen Bereich (17b) mit verringerter Dicke in der Nähe ihrer ringförmigen Basis (17a) aufweist.

8. Schwingungsdämpfendes Lager nach einem beliebigen der vorangehenden Ansprüche, bei dem die Steuerungsvorrichtung eine pneumatische Kammer (P) aufweist, welche mit der zweiten Fläche des Ansteuerorgans (34) in Kontakt steht und selektiv entweder mit einer Unterdruckquelle (52) oder mit der Atmosphäre verbindbar ist.

9. Aktives schwingungsdämpfendes System mit:
- mindestens einem aktiven hydraulischen schwingungsdämpfenden Lager (1) nach Anspruch 8 und
- einer Betätigungsvorrichtung (50, 51), welche mit mindestens einer Vorrichtung verbindbar ist, die einen Aufnehmer (55) bildet, um die Motordrehzahl des Fahrzeugs repräsentierende Informationen zu empfangen, wobei diese Betätigungsvorrichtung geeignet ist,
• die pneumatische Kammer (P) mit einer Unterdruckquelle (52) und mit der Atmosphäre zyklisch zu verbinden, um das Ansteuerorgan (34) in Schwingungen zu versetzen, und zwar derart, dass Gegenschwingungen in der Arbeitskammer (A) erzeugt werden, wenn die Informationen, welche von der einen Aufnehmer (55) bildenden Vorrichtung empfangen werden, anzeigen, dass der Fahrzeugmotor mit einer Leerlaufdrehzahl arbeitet, und
• die pneumatische Kammer (P) dauerhaft mit der Unterdruckquelle (52) zu verbinden, wenn die Informationen, welche von der einen Aufnehmer (55) bildenden Vorrichtung empfangen werden, anzeigen, dass der Fahrzeugmotor mit einer Drehzahl arbeitet, welche höher ist als die Leerlaufdrehzahl, so dass das Ansteuerorgan (34) dann in seiner Endanschlagstellung gehalten wird.

10. Schwingungsdämpfendes System nach Anspruch 9, bei dem die Betätigungsvorrichtung (50, 51) so ausgestaltet ist, dass die pneumatische Kammer (P) auf das Ansteuerorgan (34) eine Durchschnittskraft (Fm) ausübt, welche einem linearen Anfangsabschnitt (56) der Elastizitätskurve der Rückstellvorrichtung (17) entspricht, wenn der Motor im Leerlauf arbeitet.

## Claims

1. Active hydraulic anti-vibration support designed to be interposed between two rigid elements and comprising:
- first and second rigid armatures (2, 3) intended to be fixed respectively to the two rigid elements to be connected,
- an elastomer body (5) linking the two armatures (2, 3) to one another and partially bounding a working chamber filled (A) with liquid,
- a flexible wall (26) partially bounding a compensating chamber (B) filled with liquid, which is connected to the working chamber by a throttled passage (C) also filled with liquid,
- an exciter member (34) having a first face communicating with the liquid contained in the working chamber (A) and a second opposing face isolated from said working chamber, said exciter member being movably mounted in a direction of displacement (Z) substantially perpendicular to the first and second faces of the exciter member, starting from a non-operating position,
- a control device (P) designed to displace the exciter member at least in a first direction in said direction of displacement into an end stop position,
- an elastic return device (17) permanently applying a force to the exciter member (34) to return it to its non-operating position, in accordance with a certain elasticity curve (F1(d)) which imparts said return force depending on the displacement undergone by this exciter member parallel with the direction of displacement, this curve having a tangent (F3(d)) for a first displacement value (d0) corresponding to the non-operating position of the exciter member, and the return force having a certain threshold value (Fb1) for a second displacement value (d1) corresponding to the end stop position of the exciter member,
**characterised in that** the elasticity curve (F1(d)) of the return device is non linear and is located below said tangent (F3(d)) at least in the vicinity of the second displacement value (d1).

2. Anti-vibration support as claimed in claim 1, in which the elasticity curve (F1(d)) of the return device has a maximum (57) between the first and second displacement values.

3. Anti-vibration support as claimed in claim 1 or claim 2, in which the elasticity curve (F1(d)) of the return device has a minimum (59) substantially on a level with the second displacement value.

4. Anti-vibration support as claimed in any one of the preceding claims, in which the elasticity curve (F1(d)) of the return device has a linear initial part (56).

5. Anti-vibration support as claimed in any one of the preceding claims, in which, in the non-operating position, the return device is an elastomer membrane (17) which is of a substantially truncated cone shape converging towards the working chamber (A) from an annular base (17a) joined to a rigid partition (10) bounding said working chamber.

6. Anti-vibration support as claimed in claim 5, in which the exciter member has a rigid central wall (34) which is joined to the rigid partition (10) by the elastomer membrane (17).

7. Anti-vibration support as claimed in any one of claims 5 and 6, in which the elastomer membrane has an annular zone (17b) of a reduced thickness in the vicinity of its annular base (17a).

8. Anti-vibration support as claimed in any one of the preceding claims, in which the control device is a pneumatic chamber (P) which is in contact with the second face of the exciter member (34) and which is designed to be linked selectively either to a vacuum source (52) or to the atmosphere.

9. Active anti-vibration system comprising:
- at least one active hydraulic anti-vibration support (1) as claimed in claim 8,
- and an actuating device (50, 51) which is designed to be linked to at least one device serving as a sensor (55) to receive information representative of the engine speed of the vehicle, this actuating device being designed to:
- cyclically link the pneumatic chamber (P) alternately with a vacuum source (52) and with the atmosphere in order to cause the exciter member (34) to vibrate so as to generate counter-vibrations in the working chamber (A) if the information received by the device serving as a sensor (55) indicates that the vehicle engine is operating at an idling speed;
- and link the pneumatic chamber (P) permanently to the vacuum source (52) if the information received by the device serving as a sensor (55) indicates that the vehicle engine is operating at a speed higher than the idling speed so that the exciter member (34) is then retained in its end stop position.

10. Anti-vibration system as claimed in claim 9, in which the actuating device (50, 51) is designed so that the pneumatic chamber (P) applies to the exciter member (34) a mean force (Em) corresponding to a linear initial part (56) of the elasticity curve of the return device (17) when the engine is idling.
